# FASCICULE DE BREVET EUROPEEN

(11) **EP 4 107 451 B1**
(45) Date de publication et mention de la délivrance du brevet: **22.11.2023**
(21) Numéro de dépôt: 21708060.5
(22) Date de dépôt: 05.02.2021
(51) Int. Cl.: F25B 15/00, F25B 49/04, F25B 27/00

(54) **ÉQUIPEMENT DE CLIMATISATION À PANNEAUX SOLAIRES COMPRENANT UNE MACHINE À ABSORPTION**
SOLARPANEL-KLIMATISIERUNGSANLAGE MIT ABSORPTIONSMASCHINE
SOLAR PANEL AIR CONDITIONING EQUIPMENT INCLUDING AN ABSORPTION MACHINE

(30) Priorité: 18.02.2020 FR 2001584
(43) Date de publication de la demande: 28.12.2022
(73) Titulaire: Solar Energy Future, 30130 Pont-Saint-Esprit (FR)
(72) Inventeur: GARNIER, David, 07700 SAINT MARTIN D'ARDECHE (FR); ALLEGRE, Frédéric, 30200 ORSAN (FR)
(74) Mandataire: Weber, Etienne Nicolas
(86) Numéro de dépôt international: PCT/FR2021/050221
(87) Numéro de publication internationale: WO 2021/165597

(56) Documents cités:
- CN-A- 108 332 446
- DE-A1- 3 012 308
- US-A1- 2017 138 649

## Description

### Domaine technique

La présente invention concerne un équipement de climatisation. On entend par équipement de climatisation un équipement pouvant opérer le refroidissement d'un local, et/ou le chauffage d'un local en vue d'en contrôler la température.

Elle concerne plus précisément un équipement faisant appel à une machine à absorption et à des panneaux solaires.

L'invention trouve des applications pour la climatisation et le contrôle de la température de locaux d'habitation, de locaux industriels, par exemple des locaux de stockage, ou encore de locaux agricoles.

### Etat de la technique antérieure

On connait l'usage d'équipements solaires pour le chauffage de locaux en hiver, et plus généralement lorsqu'une température ambiante insuffisante le requiert. Ces équipements peuvent mettre en oeuvre notamment la circulation d'un fluide caloporteur à travers des panneaux solaires. Le rayonnement solaire capté par les panneaux solaires permet alors de réchauffer le fluide caloporteur. La chaleur du fluide caloporteur est ensuite diffusée dans le local à chauffer par l'intermédiaire d'un circuit de chauffage. Le circuit de chauffage peut être le circuit d'un plancher chauffant à basse température.

On connait, par ailleurs, l'usage de pompes à chaleur, ou de machines à absorption pour refroidir le fluide caloporteur d'un circuit de refroidissement.

En particulier les machines à absorption, ou « groupe absorbeur » font appel à la vaporisation d'un fluide frigorigène pour absorber de la chaleur. Le fluide frigorigène est, par exemple, une solution de bromure de lithium dans de l'eau. Les machines à absorption comportent un échangeur thermique d'entrée destinée à fournir à la machine à absorption l'énergie nécessaire à son fonctionnement sous forme de chaleur. Elles comportent également un échangeur de sortie pour la récupération du froid généré par l'évaporation.

Une illustration d'une telle machine à absorption, et de son fonctionnement, peut être trouvée, par exemple dans les documents EP3 543 626 ou WO2006/018216.

En plus, document CN 108 332 446 A dévoile un équipement de climatisation comprenant :
- un tampon thermique comprenant au moins un premier échangeur thermique et un deuxième échangeur thermique,
- une machine à absorption avec un échangeur thermique d'entrée, et un échangeur thermique de sortie,
- au moins un échangeur de climatisation,
- au moins un panneau solaire,
- un premier circuit caloporteur comprenant l'échangeur thermique de sortie de la machine à absorption, l'échangeur de climatisation, un premier circulateur et un premier dispositif à vanne d'arrêt pouvant occuper une position ouverte, dans laquelle l'échangeur de climatisation est relié à l'échangeur thermique de sortie et une position fermée dans laquelle, l'échangeur de climatisation est coupé de l'échangeur thermique de sortie,
- un deuxième circuit caloporteur comprenant l'échangeur de climatisation, le premier échangeur thermique du tampon thermique, un deuxième circulateur et un deuxième dispositif à vanne d'arrêt pouvant occuper une position ouverte dans laquelle l'échangeur de climatisation est relié au premier échangeur thermique du tampon thermique et une position fermée dans laquelle l'échangeur de climatisation est coupé du premier échangeur thermique du tampon thermique,
- un troisième circuit caloporteur comprenant l'échangeur thermique d'entrée de la machine à absorption, le deuxième échangeur thermique du tampon thermique, un troisième circulateur et un troisième dispositif à vanne d'arrêt, pouvant occuper une position ouverte dans laquelle l'échangeur thermique d'entrée de la machine à absorption est relié au deuxième échangeur thermique du tampon thermique et une position fermée dans laquelle l'échangeur thermique d'entrée de la machine à absorption est coupé du deuxième échangeur thermique du tampon thermique, et
- un quatrième circuit caloporteur comprenant le panneau solaire, le deuxième échangeur thermique du tampon thermique, et un quatrième circulateur.

### Exposé de l'invention

L'invention part du constat d'un certain nombre de difficultés rencontrées avec les équipements de climatisation connus.

L'une des difficultés importantes rencontrée avec les dispositifs de climatisation à panneau solaire est due à un risque de surchauffe du ou des panneaux solaires. La surchauffe des panneaux intervient notamment en été lorsque le rayonnement solaire est intense. Elle peut conduire, si des précautions ne sont pas prises, à la destruction des panneaux solaires.

Aussi, pour éviter la surchauffe des panneaux solaires, il peut s'avérer nécessaire de pourvoir à leur protection temporaire du rayonnement solaire direct, ou de prévoir la mise oeuvre d'un refroidissement actif. Or, ces mesures peuvent s'avérer coûteuses et consommatrices en énergie.

Une autre difficulté, rencontrée avec les équipements de climatisation connus, est liée à l'obtention simultanée d'un coefficient de performance élevé à la fois en mode de refroidissement et en mode de chauffage.

L'invention a pour but de proposer un équipement de climatisation permettant de limiter le problème de surchauffe des panneaux solaires et permettant d'obtenir un coefficient de performance élevé.

Un autre but de l'invention est de proposer un équipement de climatisation permettant de passer facilement et rapidement d'un mode de chauffage à un mode de refroidissement.

Un autre but de l'invention est encore de proposer un équipement de climatisation dont l'approvisionnement en énergie ne fasse pas appel à des sources d'énergie fossile.

Enfin un but de l'invention est de proposer un équipement de climatisation pouvant fonctionner sous des conditions d'ensoleillement variables.

Pour atteindre ces buts, l'invention proposer plus précisément un équipement de climatisation selon la revendication 1, l'équipement de climatisation comprenant :
- un tampon thermique comprenant au moins un premier échangeur thermique et un deuxième échangeur thermique,
- une machine à absorption avec un échangeur thermique d'entrée, et un échangeur thermique de sortie,
- au moins un échangeur de climatisation,
- au moins un panneau solaire,
- un premier circuit caloporteur comprenant l'échangeur thermique de sortie de la machine à absorption, l'échangeur de climatisation, un premier circulateur, et un premier dispositif à vanne d'arrêt pouvant occuper une position ouverte, dans laquelle l'échangeur de climatisation est relié à l'échangeur thermique de sortie et une position fermée dans laquelle, l'échangeur de climatisation est coupé de l'échangeur thermique de sortie,
- un deuxième circuit caloporteur comprenant l'échangeur de climatisation, le premier échangeur thermique du tampon thermique, un deuxième circulateur et un deuxième dispositif à vanne d'arrêt pouvant occuper une position ouverte dans laquelle l'échangeur de climatisation est relié au premier échangeur thermique du tampon thermique et une position fermée dans laquelle l'échangeur de climatisation est coupé du premier échangeur thermique du tampon thermique,
- un troisième circuit caloporteur comprenant l'échangeur thermique d'entrée de la machine à absorption, le premier échangeur thermique du tampon thermique, un troisième circulateur, et un troisième dispositif à vanne d'arrêt, pouvant occuper une position ouverte dans laquelle l'échangeur thermique d'entrée de la machine à absorption est relié au premier échangeur thermique du tampon thermique et une position fermée dans laquelle l'échangeur thermique d'entrée de la machine à absorption est coupé au premier échangeur thermique du tampon thermique.
- un quatrième circuit caloporteur comprenant le panneau solaire, le deuxième échangeur thermique du tampon thermique, et un quatrième circulateur.

On entend par fluide caloporteur un liquide, ou éventuellement un gaz, servant de vecteur d'énergie thermique, sans préjuger de sa température. En d'autres thermes, le fluide caloporteur peut transporter du chaud, ou du froid, c'est à dire une énergie thermique mesurée en calories ou en frigories. Le fluide caloporteur peut être de l'eau ou de l'eau additionnée d'un antigel, par exemple.

Le fluide caloporteur circule notamment dans des échangeurs thermiques, dans un échangeur de climatisation et dans des circuits caloporteurs. Le fluide caloporteur circule également dans des conduites reliant ces différents organes.

On entend par tampon thermique un organe capable d'absorber de l'énergie thermique, de la stocker temporairement et de la restituer. Le tampon thermique peut comporter, par exemple, un ou plusieurs réservoirs contenant de l'eau, un liquide comparable au fluide caloporteur, ou un autre matériau liquide ou solide susceptible de stocker la chaleur.

On entend par échangeur de climatisation un circuit caloporteur particulier destiné à échanger de l'énergie thermique (chaud ou froid) avec un local aménagé avec l'équipement de climatisation. En particulier l'échangeur de climatisation peut comporter l'un parmi un plancher à dalle active et un radiateur. Plusieurs échangeurs de climatisation peuvent être prévus pour un même local ou pour des locaux différents à climatiser.

Un plancher à dalle active est un plancher, généralement en béton, parcouru par des conduites, par exemple des conduites en polyéthylène réticulé, et à travers lesquelles on fait circuler le fluide caloporteur. Le fluide caloporteur permet de transmettre de l'énergie thermique à la dalle active, ou d'absorber de l'énergie thermique de la dalle active et ainsi chauffer ou refroidir un local dans lequel se trouve la dalle active.

Comme indiqué précédemment, le tampon thermique comprend un premier et un deuxième échangeur thermique. Les échangeurs thermiques sont prévus soit pour céder de l'énergie calorifique d'un circuit caloporteur au tampon thermique, soit pour absorber de l'énergie thermique du tampon thermique et la transmettre à un circuit caloporteur.

Les échangeurs thermiques cèdent de l'énergie au tampon thermique lorsque la température des échangeurs et du fluide caloporteur qui les traverse est supérieure à une température du tampon thermique. Inversement les échangeurs absorbent de l'énergie du tampon thermique lorsque la température des échangeurs et du fluide caloporteur qui les traverse est inférieure à une température du tampon thermique.

De préférence, le fluide caloporteur du premier et du deuxième échangeurs ne se mélangent pas au contenu du tampon thermique, mais en sont fluidiquement isolés.

De manière avantageuse le tampon thermique peut comporter un premier réservoir un deuxième réservoir communiquant mutuellement, le premier réservoir comprenant le premier échangeur thermique et le deuxième réservoir comprenant le deuxième échangeur thermique. Le fait de disposer le premier et le deuxième échangeur thermique dans des réservoirs distincts du tampon thermique permet de moduler au besoin le transfert d'énergie entre le premier échangeur thermique et le deuxième échangeur thermique en augmentant ou en restreignant la communication entre les réservoirs du tampon thermique. A cet effet un circulateur peut être prévu entre le premier et le deuxième réservoir pour accélérer les échanges thermiques.

Par ailleurs, et selon une autre configuration intéressante, le tampon thermique peut encore compoter un troisième réservoir pouvant être mis en communication avec le premier et le deuxième réservoir. La mise en communication ou non du troisième réservoir avec le premier ou le deuxième réservoir permet d'augmenter ou de restreindre au besoin la capacité thermique et l'inertie thermique du tampon thermique.

Le premier échangeur thermique du tampon thermique peut être démultiplié et en particulier dédoublé. Dans ce cas le deuxième circuit caloporteur et le troisième circuit caloporteurs peuvent intégrer deux échangeurs thermiques différents constituant le « premier échangeur thermique » au sens de l'invention.

Une fonction du tampon thermique est de fournir l'énergie nécessaire au chauffage ou au fonctionnement de la machine à absorption mais aussi pour permettre un stockage de l'énergie pour un fonctionnement de l'équipement lorsque l'ensoleillement est faible ou nul et notamment pour un fonctionnement de nuit.

Une fonction supplémentaire du tampon thermique est de pouvoir absorber au besoin une énergie thermique excessive reçue par le panneau solaire, de manière à éviter sa surchauffe.

La machine a absorption a pour fonction essentielle de produire du froid, c'est-à-dire d'absorber des calories ou de produire des frigories. Elle est également pourvue d'échangeurs thermiques. Un échangeur thermique d'entrée permet d'apporter à la machine à absorption l'énergie thermique nécessaire à son fonctionnement. Un échangeur thermique de sortie permet à la machine de transmettre du froid à un circuit, c'est-à-dire d'absorber de l'énergie thermique d'un circuit caloporteur relié à l'échangeur thermique de sortie.

On entend par panneau solaire un panneau susceptible d'être exposé au soleil et traversé par des tubages dans lesquels on peut faire circuler un fluide caloporteur. L'énergie solaire collectée par le panneau solaire sert à chauffer le fluide caloporteur traversant le panneau solaire. Ainsi le panneau solaire est assimilé à un producteur de chaleur. L'utilisation du terme « panneau solaire » au singulier ne préjuge pas de la possibilité d'utiliser plusieurs panneaux solaires en série ou en parallèle. Elle est donc comprise comme englobant à la fois l'utilisation d'un panneau unique et celle de plusieurs panneaux, par exemple une batterie de panneaux solaires.

Les dispositifs à vanne d'arrêt mis en oeuvre dans l'équipement de l'invention ont pour fonction de relier différents organes à des circuits caloporteurs ou des en isoler, selon leur état de commutation ouvert ou fermé. Les dispositifs à vanne d'arrêt peuvent être pourvus d'une vanne d'arrêt unique connectée en série avec une conduite d'entrée ou une conduite de sortie de l'organe qui en est pourvu. Toutefois, et de préférence, les dispositifs à vanne d'arrêt peuvent aussi comporter respectivement une première vanne d'arrêt et une deuxième vanne d'arrêt disposées sur des branches différentes des circuits caloporteurs correspondants. En particulier les deux vannes d'arrêt peuvent être en série respectivement avec une conduite d'entrée et une conduite de sortie d'un organe associé au dispositif à vanne d'arrêt. Dans ce cas, les deux vannes sont généralement ouvertes ou fermées de manière concomitante.

On considère qu'un dispositif à vanne d'arrêt est « ouvert » lorsqu'il laisse passer le fluide caloporteur. Inversement on considère qu'il est « fermé » lorsqu'il s'oppose au passage de fluide caloporteur.

Les vannes d'arrêt des dispositifs à vanne d'arrêt sont de préférence des électrovannes, c'est-à-dire des vannes à commande électrique. Les dispositifs à vanne d'arrêt et les vannes d'arrêt qui en font partie, peuvent, dans ce cas, être raccordés à une unité de pilotage permettant de piloter leur ouverture ou leur fermeture respective.

Les circulateurs sont de pompes électriques montées en série dans les circuits caloporteurs. Lorsqu'ils sont en fonctionnement, ils provoquent la circulation d'un fluide caloporteur contenu dans les circuits caloporteurs.

Grâce à un nombre limité de dispositifs à vanne d'arrêt, il est possible de modifier le fonctionnement de l'équipement de climatisation et de l'adapter rapidement à différents besoins ou configurations de climatisation d'un local.

Le premier circuit caloporteur peut être mise en oeuvre pour transférer le froid produit par la machine à absorption à l'échangeur de climatisation de manière à rafraîchir un local équipé de l'échangeur de climatisation.

Le deuxième circuit caloporteur peut être mis en oeuvre pour transférer de la chaleur emmagasinée dans le tampon thermique dans l'échangeur de climatisation de manière à réchauffer le local équipé de l'échangeur de climatisation.

Le troisième circuit caloporteur peut être mis en oeuvre pour transférer de la chaleur emmagasinée dans le tampon thermique vers l'échangeur thermique d'entrée de ma machine à absorption, de manière à fournir à la machine à absorption l'énergie nécessaire à son fonctionnement.

Le quatrième circuit caloporteur peut être mis en oeuvre pour transférer de la chaleur produite par le panneau solaire au tampon thermique. Le quatrième circuit caloporteur peut également être mis en oeuvre au besoin, pour provoquer un refroidissement du panneau solaire afin d'éviter une surchauffe de ce dernier.

Selon un perfectionnement, le quatrième circuit caloporteur peut comporter un quatrième dispositif à vanne d'arrêt, le quatrième dispositif à vanne d'arrêt pouvant occuper une position ouverte dans laquelle le panneau solaire est relié au deuxième échangeur thermique du tampon thermique et une position fermée dans laquelle le panneau solaire est coupé au deuxième échangeur thermique du tampon thermique, et dans lequel l'équipement comprend en outre un cinquième circuit caloporteur comprenant l'échangeur thermique d'entrée de la machine à absorption, le panneau solaire, le quatrième circulateur, et un cinquième dispositif à vanne d'arrêt pouvant occuper une position ouverte dans laquelle panneau solaire est relié à l'échangeur thermique d'entrée de la machine à absorption et une position fermée dans laquelle le panneau solaire est coupé de l'échangeur thermique d'entrée de la machine à absorption.

Selon cette option, la machine à absorption peut être alimentée directement par le panneau solaire dans une situation où l'énergie résiduelle disponible dans le ballon tampon serait insuffisante pour son alimentation.

L'équipement de l'invention peut à titre accessoire comporter une chaudière permettant au besoin de chauffer le tampon thermique et de suppléer à une carence passagère en énergie solaire.

Différents modes de fonctionnement de l'équipement de l'invention peuvent être sélectionnés par l'ouverture ou la fermeture sélective des dispositifs à vanne d'arrêt et par la mise en fonctionnement ou par l'arrêt du fonctionnement sélectif des circulateurs. La sélection des modes peut être opérée manuellement, ou de préférence de manière automatique par une unité de pilotage.

Aussi, l'équipement de l'invention peut comporter une unité de pilotage reliée au premier circulateur, au deuxième circulateur et au troisième circulateur, au premier dispositif à vanne d'arrêt, au deuxième dispositif à vanne d'arrêt et au troisième dispositif à vanne d'arrêt et dans lequel l'unité de pilotage est configurée pour commander au moins l'un des modes de fonctionnement suivants :
- un premier mode de refroidissement dans lequel le premier, le troisième circulateur sont en fonctionnement, dans lequel le deuxième circulateur est à l'arrêt, dans lequel le premier dispositif à vanne d'arrêt et le troisième dispositif à vanne d'arrêt sont en position ouverte, et dans lequel le deuxième dispositif à vanne d'arrêt est en position fermée,
- un premier mode de chauffage dans lequel le deuxième circulateur est en fonctionnement, dans lequel le premier et le troisième circulateur sont à l'arrêt, dans lequel le deuxième dispositif à vanne d'arrêt est en position ouverte, et dans lequel le premier et le troisième dispositif à vanne d'arrêt sont en position fermée.

On considère que l'unité de pilotage est « reliée » à un circulateur ou à un dispositif à vanne d'arrêt lorsqu'elle est en mesure de commander le fonctionnement ou l'arrêt du circulateur, respectivement l'ouverture et la fermeture de vanne pour un dispositif à vanne d'arrêt. L'unité de pilotage peut être reliée électriquement aux bornes d'alimentation du circulateur ou du dispositif à vanne d'arrêt de manière à fournir directement le courant d'alimentation nécessaire à leur fonctionnement. L'unité de pilotage peut aussi être reliée indirectement par l'intermédiaire d'un dispositif d'alimentation électrique extérieur à l'unité de pilotage auquel elle envoie des signaux de commutation.

Dans le premier mode de refroidissement, l'énergie nécessaire au fonctionnement de la machine à absorption est puisée dans le tampon thermique et le froid produit par la machine à absorption est transmis à l'échangeur de climatisation.

Dans le premier mode de chauffage, l'énergie nécessaire au chauffage est puisée dans le tampon thermique et est transmise à l'échangeur de climatisation.

L'unité de pilotage peut en outre être reliée au quatrième circulateur et configurée pour une mise en fonctionnement du quatrième circulateur dans au moins l'un du premier mode de refroidissement et du premier mode de chauffage. Le fonctionnement concomitant du quatrième circulateur permet, si l'ensoleillement est suffisant, de recharger le tampon thermique au fur et à mesure de la consommation de l'énergie puisée dans le tampon thermique pour le chauffage ou pour le fonctionnement de la machine à absorption. Le fonctionnement concomitant du quatrième circulateur est optionnel et faculatif.

De manière avantageuse lorsque l'équipement est pourvu du cinquième circuit caloporteur et du cinquième dispositif à vanne d'arrêt précités, l'unité de pilotage peut en outre être reliée au quatrième circulateur et au cinquième dispositif à vanne d'arrêt et peut être configurée pour, en outre, commander sélectivement le mode de fonctionnement suivant :
- un deuxième mode de refroidissement dans lequel le premier circulateur et le quatrième circulateur sont en fonctionnement, dans lequel le deuxième circulateur et de troisième circulateur sont à l'arrêt, dans lequel le premier dispositif à vanne d'arrêt et le cinquième dispositif à vanne d'arrêt sont en position ouverte, et dans lequel le deuxième dispositif à vanne d'arrêt, le troisième dispositif à vanne d'arrêt et le quatrième dispositif à vanne d'arrêt sont en position fermée.

Dans ce deuxième mode de refroidissement le tampon thermique n'intervient pas. L'énergie nécessaire pour le fonctionnement de la machine à absorption est directement fournie par le panneau solaire. Le deuxième mode de refroidissement peut être privilégié, pour un refroidissement devant être opéré lorsque le tampon thermique ne contient plus assez d'énergie pour l'alimentation de la machine à absorption, c'est-à-dire lorsque sa température résiduelle est trop basse à cet effet.

Il convient de noter qu'une alimentation de chauffage de l'échangeur de climatisation à partir du panneau solaire, quoique possible, n'est pas un mode de fonctionnement préféré de l'équipement.

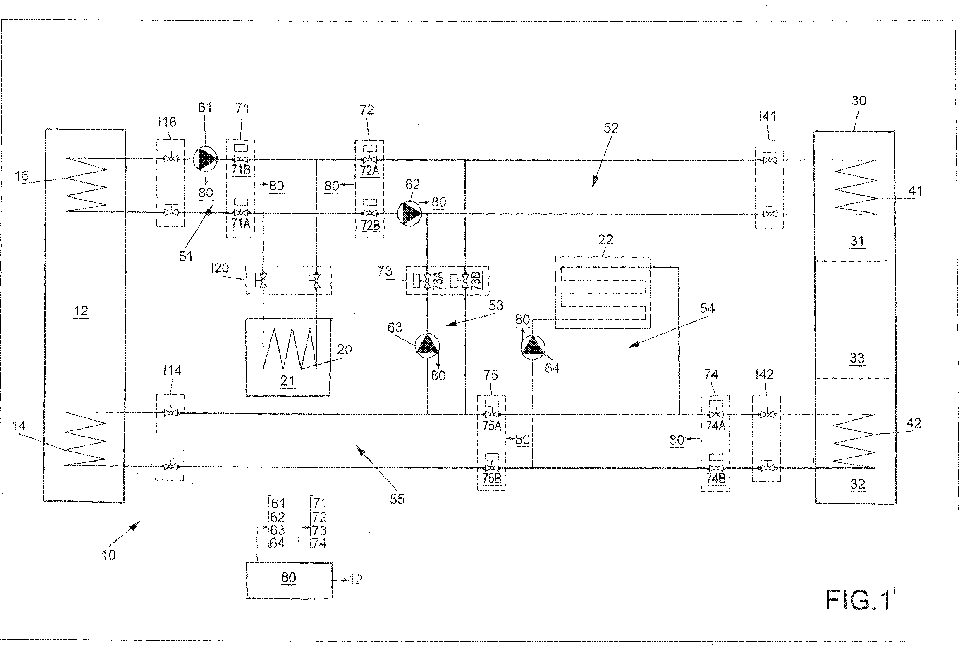

D'autres caractéristiques et avantages de l'invention ressortent de la description qui suit en référence à la figure 1. Cette description est donnée à titre illustratif et non limitatif.

### Brève description de la figure

La figure 1, unique, est une représentation schématique d'un équipement de climatisation conforme à l'invention.

### Description détaillée de modes de mise en oeuvre de l'invention

Sur la figure 1, et par simplification, des tuyaux de circuits caloporteurs reliant les différents organes de l'équipement 10 sont représentés symboliquement par de simples traits.

L'équipement de climatisation 10 de la figure 1 comprend une machine à absorption 12 pourvue d'un échangeur thermique d'entrée 14 et d'un échangeur thermique de sortie 16. La machine à absorption est représentée symboliquement en trait discontinu. Elle présente une puissance frigorifique de 230kW. La machine à absorption est reliée à une tour de refroidissement non représentée.

Un local à climatiser, non représenté, est un entrepôt. Il est pourvu d'un échangeur de climatisation 20. Dans l'exemple illustré il s'agit d'un plancher avec une dalle active 21. Le plancher à dalle active présente une surface de 2500m² et est parcouru par 10 km de tube de polyéthylène réticulé d'un diamètre de 25mm.

L'équipement de climatisation 10 comprend également un panneau solaire 22. Il s'agit plus précisément d'un assemblage d'une cinquantaine de panneaux solaires individuels, de 10m² chacun et avec une surface totale de 500m². Les panneaux sont montés sur une ossature métallique non représentée.

Un tampon thermique 30 comprend trois réservoirs 31, 32 et 33, sous la forme de trois ballons de stockage d'une capacité de 25m3 chacun, en communication les uns avec les autres. Les réservoirs sont replis d'eau servant d'accumulateur thermique. Le premier réservoir 31 contient un premier échangeur thermique 41 et le deuxième réservoir 32 contient un deuxième échangeur thermique 42. Le troisième réservoir 33, disposé entre le premier et le deuxième réservoir est dépourvu d'échangeur thermique, mais est en communication avec le premier et le deuxième réservoir. Les échangeurs thermiques comportent des tuyaux métalliques, par exemple en cuivre, s'étendant dans les réservoirs correspondants. Il convient de souligner que l'eau contenue dans les réservoirs 31, 32, 33 ne se mélange pas au fluide caloporteur circulant dans les échangeurs thermiques 41, 42.

Un premier circuit caloporteur 51 comprend l'échangeur thermique de sortie 16 de la machine à absorption 12, l'échangeur de climatisation 20, un premier circulateur 61 et un premier dispositif à vanne d'arrêt 71 pourvu de deux vannes d'arrêt 71A, 71B. Le premier dispositif à vanne d'arrêt permet de relier l'échangeur de climatisation au premier circuit caloporteur ou de l'en isoler. Une première vanne d'arrêt 71A se trouve sur une branche du circuit caloporteur en amont de l'échangeur thermique de sortie, tandis qu'une deuxième vanne d'arrêt 71B du dispositif à vanne d'arrêt se trouve sur une branche du circuit caloporteur en aval de l'échangeur thermique.

Le premier circuit caloporteur permet de refroidir le local pourvu de l'échangeur de climatisation lorsque premier dispositif à vanne d'arrêt 71 est ouvert et lorsque le premier circulateur 61 est en fonctionnement. Le froid produit par la machine à absorption 12 est alors transmis à l'échangeur de climatisation 20. En d'autres termes, de l'énergie calorifique absorbée dans le local par l'échangeur de climatisation est transmise à l'échangeur thermique de sortie 16 de la machine à absorption 12.

Un deuxième circuit caloporteur 52 comprend également l'échangeur de climatisation 20 du local. Il comprend un outre un deuxième circulateur 62 et le premier échangeur thermique 41 du tampon thermique 30. Un deuxième dispositif à vanne d'arrêt 72 permet de relier l'échangeur de climatisation 20 au deuxième circuit caloporteur ou de l'en isoler. Il comprend deux vannes d'arrêt 72A, 72B correspondant à deux branches du deuxième circuit caloporteur en amont et en aval de l'échangeur de climatisation 20.

Le deuxième circuit caloporteur 52 permet de réchauffer le local pourvu de l'échangeur de climatisation 20 à partir de la chaleur stockée dans le tampon thermique 30. Ceci est le cas lorsque deuxième dispositif à vanne d'arrêt 72 est ouvert et lorsque le deuxième circulateur 62 est en fonctionnement. Le deuxième circuit caloporteur 52 permet de transférer au local de l'énergie calorifique (chaud) emmagasinée dans le tampon thermique 30.

Il convient de préciser que le premier dispositif à vanne d'arrêt 71 et le deuxième dispositif à vanne d'arrêt 72 ne sont pas ouverts simultanément. De même le premier circulateur 61 et le deuxième circulateur 62 ne sont pas en fonctionnement simultanément.

Un troisième circuit caloporteur 53 sert à alimenter en énergie, et notamment en énergie calorifique, la machine à absorption 12. L'alimentation a lieu à partir de la chaleur du tampon thermique 30. Le troisième circuit caloporteur comprend le premier échangeur thermique 41 du tampon thermique 30, ou un autre échangeur thermique équivalent du tampon thermique, un troisième circulateur 63 et l'échangeur thermique d'entrée 14 de la machine à absorption 12. Un troisième dispositif à vanne d'arrêt 73 permet de relier le troisième circuit caloporteur au tampon thermique ou à l'isoler du tampon thermique. Dans l'exemple de mise en oeuvre illustré le troisième dispositif à vanne d'arrêt comprend des vannes d'arrêt 73A, 73B respectivement en amont et en aval du premier échangeur thermique 41 du tampon thermique. Le troisième dispositif à vanne d'arrêt 73 est ouvert et le troisième circulateur est en fonctionnement lorsque la machine à absorption produit du froid.

Un quatrième circuit caloporteur 54 est destiné à alimenter le tampon thermique avec l'énergie thermique solaire captée par le panneau solaire 22. Le quatrième circuit caloporteur comprend ainsi le panneau solaire 22, le deuxième échangeur thermique 42 du tampon thermique et un quatrième circulateur 64. Accessoirement le quatrième circuit caloporteur peut comporter un quatrième dispositif à vanne d'arrêt 74, avec deux vannes d'arrêt 74A, 74B respectivement en amont et en aval du deuxième échangeur thermique 42. La présence du quatrième dispositif à vanne d'arrêt 74 est facultative dans un mode de réalisation simplifié de l'équipement.

Le quatrième circuit caloporteur 54 peut être activé par la mise en fonctionnement du quatrième circulateur 64 et par l'ouverture, le cas échéant, du quatrième dispositif à vanne d'arrêt 74. L'activation du quatrième circuit caloporteur 54 peut être dictée soit par un besoin de recharger le tampon thermique en énergie thermique, c'est-à-dire de chauffer le tampon thermique, soit par un besoin de refroidir le panneau solaire, en cas de surchauffe du panneau solaire.

Le quatrième circuit caloporteur peut être entièrement autonome des autres circuits caloporteurs précités.

Toutefois, et selon un perfectionnement un cinquième circuit caloporteur 55 peut être prévu de manière à mettre en communication certains organes du quatrième circuit caloporteur avec l'échangeur d'entrée 14 de la machine à absorption 12.

Le cinquième circuit caloporteur comprend ainsi l'échangeur d'entrée 14 de la machine à absorption 12, le panneau solaire 22 et le quatrième circulateur 54 associé au panneau solaire. Il comprend également un cinquième dispositif à vanne d'arrêt 75, avec une première vanne d'arrêt 75A et une deuxième vanne d'arrêt 75B respectivement en amont et en aval de l'échangeur d'entrée 14 de la machine à absorption 12. Le cinquième dispositif à vanne d'arrêt 75 et le quatrième dispositif à vanne 74 d'arrêt ne sont pas ouverts de manière concomitante.

Lorsque le cinquième dispositif à vanne d'arrêt 75 est fermé et que le quatrième dispositif à vanne d'arrêt 74 est ouvert, le panneau solaire 22 alimente en énergie le tampon thermique 30. Inversement, lorsque le cinquième dispositif à vanne d'arrêt 75 est ouvert et que le quatrième dispositif à vanne d'arrêt est fermé, le panneau solaire 22 alimente directement la machine à absorption 12. Dans cette dernière configuration le troisième dispositif à vanne d'arrêt est de préférence fermé et le troisième circulateur 63 est hors fonctionnement.

Outre les dispositifs à vanne d'arrêt mentionnés précédemment, on peut noter que les échangeurs thermiques de l'équipement 10 et en particulier le premier échangeur thermique 41 du tampon thermique 30, le deuxième échangeur thermique 42 du tampon thermique 30, l'échangeur thermique de sortie 16 de la machine à absorption 12 , l'échangeur thermique d'entrée 14 de la machine à absorption 12 et l'échangeur de climatisation 20 sont pourvus chacun d'un dispositif à vanne d'arrêt d'isolation, I41, I42, I16, I14 et I20 respectivement. Ces dispositifs à vanne d'arrêt n'interviennent pas directement dans le fonctionnement et sont généralement en position ouverte. La fermeture de ces dispositifs à vanne d'arrêt peut être provoquée pour des besoins de maintenance ou éventuellement en cas d'avarie.

Le fonctionnement de l'équipement de climatisation et sa configuration en mode de chauffage ou de refroidissement sont gérés par une unité de pilotage 80.

L'unité de pilotage 80 est construite par exemple autour d'un microcontrôleur, ou autour d'un circuit intégré dédié. Elle est reliée électriquement aux différents circulateurs et aux différents dispositifs à vanne d'arrêt. Elle permet de commander le fonctionnement ou l'arrêt des circulateurs 61, 62, 63, 64, voire un débit des circulateurs, elle permet également de commander l'ouverture ou la fermeture des vannes des dispositifs à vanne d'arrêt 71, 72, 73, 74, 75 qui sont dans ce cas des électrovannes. L'unité de pilotage 80 peut délivrer simplement de signaux de commande ou de commutation. Elle peut également intégrer une alimentation électrique et délivrer directement un courant de fonctionnement aux circulateurs ou aux vannes d'arrêt.

Plus généralement l'unité de pilotage 80 peut aussi servir de régulation du chauffage ou du refroidissement du local, en recevant, par exemple le signal de sondes thermiques et en pilotant, par exemple le fonctionnement de la machine à absorption 12 ou la commutation entre un mode de chauffage et un mode de refroidissement. L'unité de pilotage 80 peut encore être pourvue d'une interface, non représentée, permettant à un utilisateur de saisir de consignes de climatisation et/ou de sélectionner manuellement un mode de fonctionnement.

Dans le mode de chauffage, l'équipement décrit consomme une puissance électrique de 4,5 KW, essentiellement pour le fonctionnement des circulateurs, et produit une puissance calorifique de chauffage de 250KW, ce qui correspond à un coefficient de performance de 55.

Dans un mode de refroidissement l'équipement consomme une puissance électrique de 13,5KW et produit une puissance frigorifique de 250 KW, ce qui correspond à un coefficient de performance de 18,5.

## Revendications

1. Equipement de climatisation (10) comprenant :
- un tampon thermique (30), comprenant un premier réservoir (31) et un deuxième réservoir (32) communiquant mutuellement, le premier réservoir comprenant un premier échangeur thermique (41) et le deuxième réservoir comprenant un deuxième échangeur thermique (42)
- une machine à absorption (12) avec un échangeur thermique d'entrée (14), et un échangeur thermique de sortie (16),
- au moins un échangeur de climatisation (20),
- au moins un panneau solaire (22),
- un premier circuit caloporteur (51) comprenant l'échangeur thermique de sortie (16) de la machine à absorption (12), l'échangeur de climatisation (20), un premier circulateur (61) et un premier dispositif à vanne d'arrêt (71) pouvant occuper une position ouverte, dans laquelle l'échangeur de climatisation (20) est relié à l'échangeur thermique de sortie (16) et une position fermée dans laquelle, l'échangeur de climatisation est coupé de l'échangeur thermique de sortie (16),
- un deuxième circuit caloporteur (52) comprenant l'échangeur de climatisation (20), le premier échangeur thermique (41) du tampon thermique (30), un deuxième circulateur (62) et un deuxième dispositif à vanne d'arrêt (72) pouvant occuper une position ouverte dans laquelle l'échangeur de climatisation (20) est relié au premier échangeur thermique (41) du tampon thermique (30) et une position fermée dans laquelle l'échangeur de climatisation (20) est coupé du premier échangeur thermique (41) du tampon thermique (30),
- un troisième circuit caloporteur (53) comprenant l'échangeur thermique d'entrée (14) de la machine à absorption (12), le premier échangeur thermique (41) du tampon thermique (30), un troisième circulateur (63) et un troisième dispositif à vanne d'arrêt (73), pouvant occuper une position ouverte dans laquelle l'échangeur thermique d'entrée (14) de la machine à absorption est relié au premier échangeur thermique (41) du tampon thermique (30) et une position fermée dans laquelle l'échangeur thermique d'entrée (14) de la machine à absorption (12) est coupé du premier échangeur thermique (41) du tampon thermique (30),
- un quatrième circuit caloporteur (54) comprenant le panneau solaire (22), le deuxième échangeur thermique (42) du tampon thermique, et un quatrième circulateur (64).

2. Equipement selon la revendication 1, dans lequel l'échangeur de climatisation (20) comprend au moins l'un parmi un plancher à dalle active (21) et un radiateur.

3. Equipement selon la revendication 1 ou 2, comprenant un troisième réservoir (33) pouvant être mis en communication avec le premier réservoir (31) et le deuxième réservoir (32).

4. Equipement selon l'une quelconque des revendications précédentes, dans lequel le quatrième circuit caloporteur (54) comprend un quatrième dispositif à vanne d'arrêt (74), le quatrième dispositif à vanne d'arrêt (74) pouvant occuper une position ouverte dans laquelle le panneau solaire (22) est relié au deuxième échangeur thermique (42) du tampon thermique (30) et une position fermée dans laquelle le panneau solaire (22) est coupé du deuxième échangeur thermique (42) du tampon thermique (30), et dans lequel l'équipement comprend en outre un cinquième circuit caloporteur (55) comprenant l'échangeur thermique d'entrée (14) de la machine à absorption (12), le panneau solaire (22), le quatrième circulateur (54), et un cinquième dispositif à vanne d'arrêt (75) pouvant occuper une position ouverte dans laquelle panneau solaire (22) est relié à l'échangeur thermique d'entrée (14) de la machine à absorption (12) et une position fermée dans laquelle le panneau solaire (22) est coupé de l'échangeur thermique d'entrée (14) de la machine à absorption (12).

5. Equipement selon l'une quelconque des revendications précédentes, dans lequel les dispositifs à vanne d'arrêt (71, 72, 73, 74, 75) comprennent respectivement une première vanne d'arrêt (71A, 72A, 73A, 74A, 75A) et une deuxième vanne d'arrêt (71B, 72B, 73B, 74B, 75B) disposées sur des branches différentes des circuits caloporteurs (52, 53, 54, 55) correspondants.

6. Equipement selon l'une quelconque des revendications 1 à 4 comprenant une unité de pilotage (80) reliée au premier circulateur (61), au deuxième circulateur (62) et au troisième circulateur (63), au premier dispositif à vanne d'arrêt (71), au deuxième dispositif à vanne d'arrêt (72) et au troisième dispositif à vanne d'arrêt (73), et dans lequel l'unité de pilotage est configurée pour commander sélectivement au moins l'un des modes de fonctionnement suivants :
- un premier mode de refroidissement dans lequel le premier circulateur et le troisième circulateur sont en fonctionnement, dans lequel le deuxième circulateur est à l'arrêt, dans lequel le premier dispositif à vanne d'arrêt et le troisième dispositif à vanne d'arrêt sont en position ouverte, et dans lequel le deuxième dispositif à vanne d'arrêt est en position fermée.
- un premier mode de chauffage dans lequel le deuxième circulateur est en fonctionnement, dans lequel le premier et le troisième circulateur sont à l'arrêt, dans lequel le deuxième dispositif à vanne d'arrêt est en position ouverte, et dans lequel le premier dispositif à vanne d'arrêt et le troisième dispositif à vanne d'arrêt sont en position fermée.

7. Equipement selon la revendication 6, dans lequel l'unité de pilotage est en outre reliée au quatrième circulateur et configurée pour une mise en fonctionnement du quatrième circulateur (64) dans au moins l'un du premier mode de refroidissement et du premier mode de chauffage.

8. Equipement selon les revendications 4 et 6, dans lequel l'unité de pilotage est en outre reliée au quatrième circulateur (64) et à un cinquième dispositif à vanne d'arrêt (75) configurée pour, en outre, commander sélectivement le mode de fonctionnement suivant :
- un deuxième mode de refroidissement dans lequel le premier circulateur (61) et le quatrième circulateur (64) sont en fonctionnement, dans lequel le deuxième circulateur (62) et de troisième circulateur (63) sont à l'arrêt, dans lequel le premier dispositif à vanne d'arrêt (71) et le cinquième dispositif à vanne d'arrêt (75) sont en position ouverte, et dans lequel le deuxième dispositif à vanne d'arrêt (72), le troisième dispositif à vanne d'arrêt (73) et le quatrième dispositif à vanne d'arrêt (74) sont en position fermée.

## Patentansprüche

1. Klimaanlage (10), umfassend:
- einen Wärmepuffer (30), der einen ersten Behälter (31) und einen zweiten Behälter (32) umfasst, die miteinander in Kommunikation stehen, wobei der erste Behälter einen ersten Wärmetauscher (41) umfasst und der zweite Behälter einen zweiten Wärmetauscher (42) umfasst,
- eine Absorptionsmaschine (12) mit einem Einlass-Wärmetauscher (14) und einem Auslass-Wärmetauscher (16),
- mindestens einen Klimatisierungstauscher (20),
- mindestens ein Solarpanel (22),
- einen ersten Wärmetauschkreislauf (51), der den Auslass-Wärmetauscher (16) der Absorptionsmaschine (12) umfasst, den Klimatisierungstauscher (20), einen ersten Zirkulator (61) und eine erste Absperrventilvorrichtung (71), die eine offene Position einnehmen kann, in der der Klimatisierungstauscher (20) mit dem Auslass-Wärmetauscher (16) verbunden ist, und eine geschlossene Position, in der der Klimatisierungstauscher vom Auslass-Wärmetauscher (16) getrennt ist,
- einen zweiten Wärmetauschkreislauf (52), der den Klimatisierungstauscher (20) umfasst, den ersten Wärmetauscher (41) des Wärmepuffers (30), einen zweiten Zirkulator (62) und eine zweite Absperrventilvorrichtung (72), die eine offene Position einnehmen kann, in der der Klimatisierungstauscher (20) mit dem ersten Wärmetauscher (41) des Wärmepuffers (30) verbunden ist, und eine geschlossene Position, in der der Klimatisierungstauscher (20) vom ersten Wärmetauscher (41) des Wärmepuffers (30) getrennt ist,
- einen dritten Wärmetauschkreislauf (53), der den Einlass-Wärmetauscher (14) der Absorptionsmaschine (12) umfasst, den ersten Wärmetauscher (41) des Wärmepuffers (30), einen dritten Zirkulator (63) und eine dritte Absperrventilvorrichtung (73), die eine offene Position einnehmen kann, in der der Einlass-Wärmetauscher (14) der Absorptionsmaschine mit dem ersten Wärmetauscher (41) des Wärmepuffers (30) verbunden ist, und eine geschlossene Position, in der der Einlass-Wärmetauscher (14) der Absorptionsmaschine (12) vom ersten Wärmetauscher (41) des Wärmepuffers (30) getrennt ist,
- einen vierten Wärmetauschkreislauf (54), der das Solarpanel (22) umfasst, den zweiten Wärmetauscher (42) des Wärmepuffers und einen vierten Zirkulator (64).

2. Anlage nach Anspruch 1, wobei der Klimatisierungstauscher (20) mindestens eines von einem Boden mit aktiven Platten (21) und einem Radiator umfasst.

3. Anlage nach Anspruch 1 oder 2, einen dritten Behälter (33) umfassend, der mit dem ersten Behälter (31) und dem zweiten Behälter (32) in Verbindung gebracht werden kann.

4. Anlage nach einem der vorhergehenden Ansprüche, wobei der vierte Wärmetauschkreislauf (54) eine vierte Absperrventilvorrichtung (74) umfasst, wobei die vierte Absperrventilvorrichtung (74) eine offene Position einnehmen kann, in der das Solarpanel (22) mit dem zweiten Wärmetauscher (42) des Wärmepuffers (30) verbunden ist, und eine geschlossene Position, in der das Solarpanel (22) vom zweiten Wärmetauscher (42) des Wärmepuffers (30) getrennt ist, und wobei die Anlage ferner einen fünften Wärmetauschkreislauf (55) umfasst, der den Einlass-Wärmetauscher (14) der Absorptionsmaschine (12) umfasst, das Solarpanel (22), den vierten Zirkulator (54) und eine fünfte Absperrventilvorrichtung (75), die eine offene Position einnehmen kann, in der das Solarpanel (22) mit dem Einlass-Wärmetauscher (14) der Absorptionsmaschine (12) verbunden ist, und eine geschlossene Position, in der das Solarpanel (22) vom Einlass-Wärmetauscher (14) der Absorptionsmaschine (12) getrennt ist.

5. Anlage nach einem der vorhergehenden Ansprüche, wobei die Absperrventilvorrichtungen (71, 72, 73, 74, 75) jeweils ein erstes Absperrventil (71A, 72A, 73A, 74A, 75A) und ein zweites Absperrventil (71B, 72B, 73B, 74B, 75B) umfassen, die an verschiedenen Zweigen der entsprechenden Wärmetauschkreisläufe (52, 53, 54, 55) angeordnet sind.

6. Anlage nach einem der Ansprüche 1 bis 4, eine Steuereinheit (80) umfassend, die mit dem ersten Zirkulator (61) verbunden ist, dem zweiten Zirkulator (62) und dem dritten Zirkulator (63), der ersten Absperrventilvorrichtung (71), der zweiten Absperrventilvorrichtung (72) und der dritten Absperrventilvorrichtung (73), und wobei die Steuereinheit konfiguriert ist, um mindestens einen der folgenden Betriebsmodi selektiv zu steuern:
- einen ersten Kühlmodus, wobei der erste Zirkulator und der dritte Zirkulator in Betrieb sind, wobei der zweite Zirkulator abgeschaltet ist, wobei sich die erste Absperrventilvorrichtung und die dritte Absperrventilvorrichtung in der offenen Position befinden, und wobei sich die zweite Absperrventilvorrichtung in der geschlossenen Position befindet,
- einen ersten Heizmodus, wobei der zweite Zirkulator in Betrieb ist, wobei der erste und der dritte Zirkulator abgeschaltet ist, wobei sich die zweite Absperrventilvorrichtung in der offenen Position befindet, und wobei sich die erste Absperrventilvorrichtung und die dritte Absperrventilvorrichtung in der geschlossenen Position befinden.

7. Anlage nach Anspruch 6, wobei die Steuereinheit ferner mit dem vierten Zirkulator verbunden ist, und für die Inbetriebnahme des vierten Zirkulators (64) in mindestens einem des ersten Kühlmodus und des ersten Heizmodus konfiguriert ist.

8. Anlage nach Anspruch 4 und 6, wobei die Steuereinheit ferner mit dem vierten Zirkulator (64) und mit einer fünften Absperrventilvorrichtung (75) verbunden ist, und konfiguriert ist, um, ferner, den folgenden Betriebsmodus selektiv zu steuern:
- einen zweiten Kühlmodus, wobei der erste Zirkulator (61) und der vierte Zirkulator (64) in Betrieb sind, wobei der zweite Zirkulator (62) und der dritte Zirkulator (63) abgeschaltet sind, wobei sich die erste Absperrventilvorrichtung (71) und die fünfte Absperrventilvorrichtung (75) in der offenen Position befinden und wobei sich die zweite Absperrventilvorrichtung (72), die dritte Absperrventilvorrichtung (73) und die vierte Absperrventilvorrichtung (74) in der geschlossenen Position befinden.

## Claims

1. An air conditioning equipment (10) comprising:
- a thermal pad (30), comprising a first tank (31) and a second tank (32) communicating mutually, the first tank comprising a first heat exchanger (41) and the second tank comprising a second heat exchanger (42)
- an absorption machine (12) with an inlet heat exchanger (14), and an outlet heat exchanger (16),
- at least one air conditioning exchanger (20),
- at least one solar panel (22),
- a first heat transfer circuit (51) comprising the outlet heat exchanger (16) of the absorption machine (12), the air conditioning exchanger (20), a first circulator (61) and a first stop valve device (71) which can occupy an open position, wherein the air conditioning exchanger (20) is connected to the outlet heat exchanger (16) and a closed position wherein the air conditioning exchanger is cut off from the outlet heat exchanger (16),
- a second heat transfer circuit (52) comprising the air conditioning exchanger (20), the first heat exchanger (41) of the thermal pad (30), a second circulator (62) and a second stop valve device (72) capable of occupying an open position wherein the air conditioning exchanger (20) is connected to the first heat exchanger (41) of the thermal pad (30) and a closed position wherein the air conditioning exchanger (20) is cut off from the first heat exchanger (41) of the thermal pad (30),
- a third heat transfer circuit (53) comprising the inlet heat exchanger (14) of the absorption machine (12), the first heat exchanger (41) of the thermal pad (30), a third circulator (63) and a third stop valve device (73), which can occupy an open position wherein the inlet heat exchanger (14) of the absorption machine is connected to the first heat exchanger (41) of the thermal pad (30) and a closed position wherein the inlet heat exchanger (14) of the absorption machine (12) is cut off from the first heat exchanger (41) of the thermal pad (30),
- a fourth heat transfer circuit (54) comprising the solar panel (22), the second heat exchanger (42) of the thermal pad, and a fourth circulator (64).

2. The equipment according to claim 1, wherein the air conditioning exchanger (20) comprises at least one of an active slab floor (21) and a radiator.

3. The equipment according to claim 1 or 2, comprising a third tank (33) which can be communicated with the first tank (31) and the second tank (32).

4. The equipment according to any one of the preceding claims, wherein the fourth heat transfer circuit (54) comprises a fourth stop valve device (74), the fourth stop valve device (74) being able to occupy an open position wherein the solar panel (22) is connected to the second heat exchanger (42) of the thermal pad (30) and a closed position wherein the solar panel (22) is cut off from the second heat exchanger (42) of the thermal pad (30), and wherein the equipment further comprises a fifth heat transfer circuit (55) comprising the inlet heat exchanger (14) of the absorption machine (12), the solar panel (22), the fourth circulator (54), and a fifth stop valve device (75) capable of occupying an open position wherein solar panel (22) is connected to the inlet heat exchanger (14) of the absorption machine (12) and a closed position wherein the solar panel (22) is cut off from the inlet heat exchanger (14) of the absorption machine (12).

5. The equipment according to any one of the preceding claims, wherein the stop valve devices (71, 72, 73, 74, 75) respectively comprise a first stop valve (71A, 72A, 73A, 74A, 75A) and a second stop valve (71B, 72B, 73B, 74B, 75B) disposed on different branches of the corresponding heat transfer circuits (52, 53, 54, 55) .

6. The equipment according to any one of claims 1 to 4 comprising a control unit (80) connected to the first circulator (61), to the second circulator (62) and to the third circulator (63), to the first stop valve device (71), to the second stop valve device (72) and to the third stop valve device (73), and wherein the control unit is configured to selectively control at least one of the following modes of operation:
- a first cooling mode wherein the first circulator and the third circulator are in operation, wherein the second circulator is stopped, wherein the first stop valve device and the third stop valve device are in the open position, and wherein the second stop valve device is in the closed position.
- a first heating mode wherein the second circulator is in operation, wherein the first and the third circulator are stopped, wherein the second stop valve device is in the open position, and wherein the first stop valve device and the third stop valve device are in the closed position.

7. The equipment according to claim 6, wherein the control unit is further connected to the fourth circulator and configured for operation of the fourth circulator (64) in at least one of the first cooling mode and the first heating mode.

8. The equipment according to claims 4 and 6, wherein the control unit is further connected to the fourth circulator (64) and to a fifth stop valve device (75) configured, in addition, to selectively control the following mode of operation:
- a second cooling mode wherein the first circulator (61) and the fourth circulator (64) are in operation, wherein the second circulator (62) and third circulator (63) are stopped, wherein the first stop valve device (71) and the fifth stop valve device (75) are in the open position, and wherein the second stop valve device (72), the third stop valve device (73) and the fourth stop valve device (74) are in the closed position.
